# EUROPEAN PATENT SPECIFICATION

(11) **EP 4 262 412 B1**
(45) Date of publication and mention of the grant of the patent: **21.10.2026**
(21) Application number: 21844236.6
(22) Date of filing: 20.12.2021
(51) Int. Cl.: A23B 7/144, A23N 15/06, B65D 81/28

(54) **CONTAINER AND METHOD FOR STORING PRODUCE**
BEHÄLTER UND VERFAHREN ZUM AUFBEWAHREN VON FELDFRÜCHTEN
RECIPENT ET PROCEDE POUR STOCKAGE DES PRODUITS DE CHAMPS

(30) Priority: 18.12.2020 GB 202020176
(43) Date of publication of application: 25.10.2023
(73) Proprietor: CROSS REFRIGERATION (N.I.) LIMITED, Armagh BT60 1HW (GB)
(72) Inventor: NESBITT, Andrew, Armagh, BT60 1HW (GB)
(74) Representative: Hanna, John Philip
(86) International application number: PCT/EP2021/086904
(87) International publication number: WO 2022/129645

(56) References cited:
- WO-A1-2010/037170
- WO-A2-96/24260
- CN-A- 111 357 806
- US-A- 5 475 926
- US-A1- 2007 017 233
- US-A1- 2017 311 616

## Description

The present invention relates to a container for storing produce such as fruit while it is being ripened, and a method for storing such produce.

Every year huge amounts of unsold and out-of-date produce must be disposed of, inflicting a heavy toll on the environment. To reduce this problem and to maximise the shelf-life of produce it is common to harvest certain agricultural crops such as bananas before they are fully ripe, delaying their ripening until they are to be sold. While this delaying of ripening can help to maximise shelf-life, it is essential that the ripening process is carried out in such a way as to ensure that the crops are uniformly-ripened and in a near-perfect state on the shelf. Where crops ripen too early or unevenly they will be seen as undesirable by consumers and will end up being disposed of anyway.

Many producers and distributors allow crops to ripen in cold stores. This is not ideal because cold stores typically lack adequate atmosphere control equipment that would ensure even ripening. It is preferable to allow crops to ripen in dedicated containers such as ripening rooms having controlled atmospheres. These controlled atmospheres typically include a ripening agent such as ethylene gas emitted from the ripening fruit which is circulated to promote ripening.

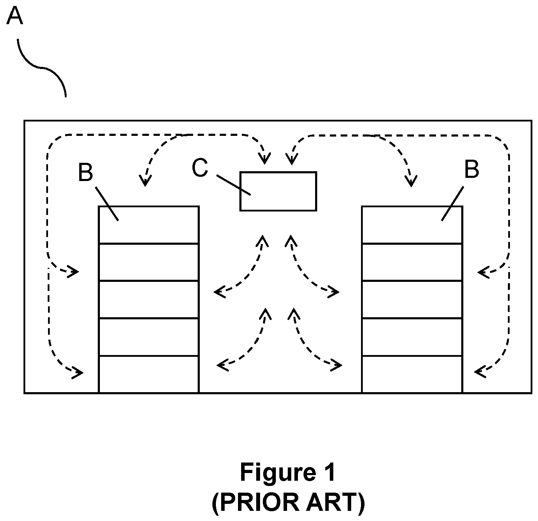

Figure 1 shows a typical prior art arrangement for storing produce comprising a container A in which crates of produce B are located. The container A includes an arrangement C for generating a flow of gas (see dashed lines) within the container A. To ensure that the produce B ripens evenly it would be ideal to ensure a uniform atmosphere/gas flow throughout the container A. However, in practice this is very difficult to achieve. It is typical for certain regions of the container A to experience less air movement, allowing temperature, humidity and/or concentrations of certain gasses to reach especially high or low levels. This means that produce in certain locations within the container A will ripen well before produce in other locations. While it is possible to increase air movement by e.g. creating a more powerful gas flow, this solution is not energy efficient, is likely to have a negative impact on the environment and would increase the costs passed on to the consumer.

Known storage containers are described in documents WO 2010/037170 A1, WO 96/24260 A2, US 2017/311616 A1 and US 2007/017233 A1.

It is an object of the invention to obviate or mitigate the problems outlined above. In particular, it is an object of the invention to provide a means by which produce can be stored and/or ripened efficiently.

It is a further object of the invention to reduce the amount of produce that is wasted.

It is a further object of the invention to reduce the amount of energy required to ripen produce.

It is a further object of the invention to ensure uniform ripening of stored produce during storage and/or transport thereof.

It is a further object of the invention to provide improved control of the ripening process of produce.

According to a first aspect of the invention there is provided a container as claimed in claim 1. Advantageously, the airbag is adapted to occupy a space adjacent to the container wall, thereby ensuring that there is at least some separation between the item and the wall of the container.

Preferably the or each airbag, in its inflated state, is adapted to exclude the flow of gas from a volume within the container.

The flow of gas does not flow within the volume of the or each airbag.

Preferably no ripening agent flows within the volume of the or each airbag.

Preferably in use no ripening agent flows within the volume of the or each airbag.

Preferably in use no ripening agent flows within or through the volume of the or each airbag

Preferably the or each airbag, in is inflated state, is adapted to exclude gas from the volume enclosed by the one or more airbags.

Preferably the or each airbag is adapted to divert the flow of gas within the container.

Ideally the or each airbag creates a seal around items within the container. Advantageously, the seal created between the airbag and the items ensures that a gas flow within the container travels along a controlled path within the container.

Preferably the or each airbag blocks off one or more paths of least resistance within the container.

Preferably the or each airbag causes the flow of gas to be forced and/or drawn through and/or past items in the container.

Preferably the or each airbag, in its inflated state, is adapted to divert the flow of gas within the container.

Preferably the or each airbag is adapted to divert the flow of gas such that the flow of gas passes items within the container.

Preferably the or each airbag is adapted to divert the flow of gas such that the flow of gas is encouraged to pass through, over and/or around items within the container. Advantageously, diverting the flow of gas towards items within the container ensures that any ripening agent within the flow of gas will encounter items within the container.

Preferably the or each airbag is adapted to prevent the flow of gas from flowing along a path within the container.

Preferably the or each airbag is adapted to prevent the flow of gas from flowing along a path where the flow of gas would not pass items within the container.

Preferably one or more airbags are located around and/or proximal to the access means of the container. Advantageously, locating one or more airbags near the access means allows the airbag to exclude the flow of gas from areas around e.g. the seal of the access means.

Ideally the container comprises a plurality of airbags. Advantageously, the plurality of airbags are able to contact multiple items within the container, or provide multiple sealing points on larger items within the container.

Ideally the or each airbag is an elongate airbag.

The container comprises at least one horizontal airbag.

The container comprises at least one airbag which extends along a horizontal development.

The container comprises at least one horizontal airbag extending along and/or adjacent to a side wall of the container.

Preferably the container comprises at least one horizontal airbag extending along and/or adjacent to an upper portion of the side wall of the container.

Preferably the container comprises at least one horizontal airbag extending along and/or adjacent to a lower portion of the side wall of the container.

Preferably the container comprises at least one vertical airbag.

Preferably the container comprises at least one airbag which extends along a vertical development.

Preferably the container comprises vertical airbags on either side of the access means.

Preferably the access means is surrounded by airbags for sealing the entrance to the container.

Preferably the or each airbag has a generally square cross section.

Preferably the or each airbag has a generally square cross section, in its inflated state.

Preferably the or each airbag is constructed from multiple panels that are stitched, welded and/or bonded.

Preferably the or each airbag is adapted to allow gas to flow around the airbag.

Preferably the or each airbag is adapted to guide a gas flow within a container.

Preferably one or more airbags are adapted to act as a cushion for at least one item within the container.

Preferably one or more of the airbags are adapted to prevent an item within the container from making contact with a wall of the container. Advantageously, the or each airbag is able to prevent items within the container from becoming damaged by the wall of the container, for example during transport.

One or more airbags are locatable between an item within the container and a wall of the container.

The or each airbag has an inflated state.

Preferably the or each airbag, when in the inflated state, has an increased volume.

Preferably the or each airbag, when in the inflated state, is substantially filled with a gas such as air.

The or each airbag has an uninflated state. Advantageously in the uninflated state one or more items can be moved into the container without being obstructed by an airbag.

Preferably the or each airbag, when in the uninflated state, has a reduced volume.

Preferably the or each airbag, when in the uninflated state, is substantially empty of gas such as air.

Preferably the or each airbag is a foldable airbag.

Preferably the or each airbag, when in the uninflated state, is folded. Advantageously, in the folded state the airbag does not bunch up and therefore occupies less room.

Preferably in the uninflated state each airbag is folded against an adjacent support structure.

Preferably during the loading/unloading of items the or each airbag is folded against an adjacent support structure.

Preferably during the loading/unloading of items the or each horizontal airbag is folded against an adjacent support structure.

Preferably during loading and/or unloading of the container the or each airbag is in its uninflated state.

Preferably during the loading/unloading of items the or each airbag is in its uninflated state. Advantageously the or each airbag being in its uninflated state means that items can be moved into and out of the container along the rails without being obstructed by the airbags.

Preferably the or each airbag is a self-folding airbag.

Preferably the or each airbag has an internal surface.

Preferably the or each airbag comprises one or more segments.

Preferably the or each airbag comprises a plurality of segments.

Ideally the or each airbag comprises internal support means.

Preferably the or each segment is separated by internal support means. Advantageously, the internal support means increases the overall strength of the airbag.

Preferably the internal support means is attachable to an internal surface of the airbag.

Preferably the or each airbag comprises internal support means attachable to an internal surface of the airbag.

Preferably the internal support means comprises one or more internal baffles. Advantageously the internal baffles limit the extent to which the airbag can extend in the lateral direction.

Preferably the internal support means comprises a plurality of internal baffles.

Preferably the or each internal support means comprises one or more apertures.

Preferably the or each internal baffle comprises one or more apertures.

Preferably the or each internal baffle comprises two apertures.

Preferably the or each aperture is configured to allow gas such as air to flow through the interior of the airbag. Advantageously, the presence of the apertures allows gas to travel throughout the entire airbag, ensuring even inflation.

Preferably the or each internal support means is substantially rectangular or trapezoidal in shape.

Preferably the or each internal support means comprises a fold line.

Preferably the or each internal support means comprises a diagonal fold line.

Preferably the or each internal support means is reinforced.

Preferably the or each internal support means is reinforced with at least one reinforcement member.

Preferably the or each reinforcement member is an elongate reinforcement member.

Preferably the or each elongate reinforcement member is a glass fiber rod.

Preferably at least one reinforcement member extends along a fold line.

Preferably at least one reinforcement member extends along a join between the airbag and the internal support means.

Preferably the or each airbag has an external surface.

Preferably the or each airbag is wipe-clean.

Preferably the external surface of the or each airbag is wipe-clean.

Preferably the or each airbag comprises one or more airtight surfaces.

Preferably the or each airbag comprises a connection aperture for allowing gas such as air to enter and/or leave the airbag.

Preferably the or each airbag comprises a single connection aperture.

Preferably the connection aperture is operably connected to an airbag control means.

Preferably the or each airbag has a substantially unbroken surface.

Preferably the or each airbag is substantially flexible.

Preferably the or each airbag is constructed from M1/B1-rated material.

Preferably the or each airbag comprises two end walls.

Preferably the or each airbag is attached to a backing means.

Preferably the or each backing means is substantially rigid.

Preferably the backing means is substantially planar.

Preferably the backing means comprises metal flashing.

Preferably the or each airbag comprises an attachment means for attaching the airbag to a retaining means.

Preferably the or each airbag comprises a plurality of attachment means.

Preferably the or each attachment means comprises an elongate rod.

Preferably the or each attachment means comprises a loop of material.

Preferably the or each attachment means is attachable to a retaining means.

Preferably the container comprises one or more retaining means.

Preferably the container comprises one or more elongate retaining means.

Preferably the or each retaining means comprises a channel portion.

Preferably the or each retaining means comprises an elongate channel portion.

Preferably the or each attachment means is locatable in a channel portion.

Preferably the or each retaining means comprises a fixing portion.

Preferably the or each retaining means comprises a planar fixing portion.

Preferably the or each planar fixing portion is attachable to one or more support means within the container.

Preferably the container comprises at least one support means for supporting and locating the one or more retaining means.

Preferably the container comprises at least one support means for supporting and locating the one or more airbags.

Preferably the container comprises two support structures for supporting and locating the one or more airbags.

Preferably the container comprises two support structures for supporting and locating the one or more retaining means and/or airbags.

Preferably the or each support structure is locatable between a wall of the container and one or more airbags.

Preferably the or each support structure is locatable adjacent to a side wall of the container.

Preferably the or each support structure has a fixed position within the container.

Preferably the or each support structure is located a fixed distance from a wall of the container.

Preferably one or more gaps are defined between a support structure and a wall of the container.

Preferably gas is permitted to flow in a space and/or gap between the support structure and a side wall of the container.

Preferably the support structure comprises one or more support members.

Preferably the or each support member is an elongate support member.

Preferably the or each support member is made from a metal such as aluminium or steel.

Preferably the or each support means extends between the floor and the ceiling of the container. Advantageously, the support means allows the airbags to be held within the container at multiple heights.

Preferably the or each support structure extends between the floor and the ceiling of the container.

Preferably the or each support means extends in a vertical direction, in use.

Preferably the container comprises an airbag control means.

Preferably the airbag control means comprises a pump or fan.

Preferably the pump or fan is adapted to pump air into and/or out of the or each airbag.

Ideally the or each airbag is operably connected to an airbag control means.

Preferably the airbag control means is adapted to control the level of inflation of the or each airbag.

Preferably the airbag control means is in operable communication with the or each airbag.

Ideally the container is a storage container.

Preferably the container is a stationary container.

Optionally the container is a mobile container.

Optionally the container is a transportable container such as a shipping container or a trailer.

Optionally the container forms part of a vehicle such as a lorry, truck or heavy goods vehicle.

Preferably the container is a ripening room.

Preferably the container is a gas-tight chamber.

Ideally the container is for ripening produce.

Preferably the container is a ripening room for ripening produce.

Preferably the container is for ripening fruit such as bananas, mangoes, papayas, pears, apricots, guavas, melons, tomatoes and/or green chilies.

Preferably the container is for reddening fruits such as tomatoes.

Preferably the container is adapted for storing one or more items.

Preferably the container is adapted for storing one or more items of produce.

Preferably the container is for storing crates of produce.

Preferably the container is for storing stacked crates of produce.

Preferably the container comprises one or more crates of produce.

The or each airbag can be inflated into contact with one or more items within the container.

Preferably the or each airbag can be inflated into contact with the surface(s) of one or more items within the container.

Preferably seals can be formed between the one or more airbags and the surface(s) of one or more items within the container.

Preferably the at least one airbag, in its inflated state, engages with a side wall of the one or more crates of produce.

Preferably the or each airbag forms a seal with the side wall of the one or more crates of produce.

Preferably the container is for storing produce locatable on pallets.

Preferably the container is suitable for receiving crates or pallets.

Preferably the container comprises one or more levels for storing items. Advantageously, the container having a plurality of levels increases the capacity of the container for a fixed footprint.

Preferably the container comprises two or three levels for storing items.

Preferably the container is a multi-storey container.

Preferably the container is a two-storey or three-storey container.

The container comprises a floor.

The container comprises a ceiling.

The container comprises one or more side walls

Preferably the container comprises one or more end walls.

Preferably the wall is a side wall and/or an end wall of the container.

The side walls and/or end walls of the container extend between the floor and ceiling of the container.

Optionally the container is a single-storey container.

Ideally the container has a controlled atmosphere.

Preferably the container comprises a controlled atmosphere.

Preferably the controlled atmosphere comprises a ripening agent.

Preferably the controlled atmosphere comprises ethylene gas.

Preferably the controlled atmosphere comprises air.

Preferably the container is operably connected to a source of ripening agent.

Ideally the container is operably connected to a source of ripening agent, such as a gas canister.

Ideally the container is operably connected to a source of ethylene gas.

Preferably, in use, ripening agent is located within the container.

Preferably, in use, ethylene gas is located within the container.

Preferably, in use, air is located within the container.

Preferably, in use, substantially no ripening agent is located within the or each airbag.

Preferably the container comprises a gas flow generation means.

Optionally the container comprises one gas flow generation means per level.

Preferably the gas flow generation means is adapted to generate a flow of gas within the container.

Preferably the gas flow generation means is adapted to generate a flow of air within the container.

Preferably the gas flow generation means is adapted to generate a flow of a ripening agent within the container.

Preferably the gas flow generation means is adapted to generate a flow of ethylene gas within the container.

Preferably the gas flow generation means comprises one or more fans.

Preferably the gas flow generation means comprises one or more ceiling-mounted fans.

Preferably the container comprises one or more gas flow guide means for guiding a flow of gas towards and/or away from the gas flow generation means.

Preferably the container comprises a plenum. By 'plenum' it is meant a space through which a gas can flow.

Preferably the container comprises one or more plenums.

Preferably the or each gas flow guide means is adapted to guide a flow of gas within the container.

Preferably the or each plenum is adapted to guide a flow of gas within the container.

Preferably a plenum is formed by the gas flow guide means, the one or more wall(s) of the container, the one or more airbags, the one or more material baffles and/or the one or more items within the container.

Preferably the or each airbag, in its inflated state, seals at least a portion of the plenum.

Preferably the or each vertical and/or horizontal airbag is adapted for sealing the plenum.

Preferably the container comprises one or more evaporators. Advantageously, the evaporators allow the atmosphere within the container to be suitably conditioned for the ripening of produce.

Preferably the or each evaporator is adapted to cool the flow of gas within the container.

Preferably the or each evaporator is adapted to cool gas within the gas flow generation means.

Preferably the gas flow generation means is operable to create a plurality of gas flows within the container.

Preferably the gas flow generation means is operable to create a flow of gas past items located within the container.

Preferably the gas flow generation means is operable to create a flow of gas past produce located within the container.

Preferably the gas flow generation means is operable to create a flow of ripening agent and air.

Preferably the gas flow generation means is operable to create a flow of ethylene gas and air.

Preferably the gas flow generation means is operable to create a flow of gas within the plenum.

Preferably the gas flow generation means is operable to create a flow of gas along a wall of the container.

Preferably the gas flow generation means is operable to create a flow of gas between a wall of the container and items located within the container.

The gas flow generation means is operable to create a flow of gas between a wall of the container and at least one airbag.

The gas flow generation means is operable to create a flow of gas between a side wall of the container and at least one airbag.

Preferably the gas flow generation means is operable to create a flow of gas between a side wall of the container and a support means within the container.

Ideally the container comprises one or more material baffles.

Preferably the or each material baffle is locatable between a sidewall of the container and an item within the container.

Preferably the or each material baffle is adapted to guide a flow of gas within the container.

Preferably the or each material baffle is adapted to confine a flow of gas next to a side wall of the container.

Preferably the or each material baffle is locatable proximal to an airbag.

Preferably the or each material baffle is adapted to guide a flow of gas towards an airbag.

Preferably the or each material baffle is adapted to cause gas to flow on one side of an airbag.

Preferably the or each material baffle is adapted to guide a flow of gas as it leaves the gas flow generation means.

Preferably the container comprises a plurality of material baffles.

Optionally the baffles have an adjustable length.

Preferably the container comprises guide means. Advantageously, the inclusion of guide means allows the container to be used with an automated loading system for produce.

Preferably the guide means comprises tracks or guide rails.

Preferably the guide means comprises one or more pairs of tracks or guide rails.

Preferably the or each pair of tracks or guide rails includes an interior track or guide rail and an exterior track or guide rail.

Preferably the or each exterior track or guide rail is that track or guide rail which is closest to a side wall of the container.

Preferably the or each track or guide rail is located in a fixed position within the container.

Preferably the or each exterior track or guide rail is located a fixed distance from a side wall of the container.

Preferably the guide means comprises one or more pairs of C-shaped channels.

Preferably the container comprises guide means for guiding one or more item positioning means.

Preferably the item positioning means is an electrically-operated item positioning means.

Preferably the item positioning means is a robotic item positioning means.

Optionally the item positioning means is a manual item positioning means.

Optionally the item positioning means is a forklift or pallet truck.

Preferably during loading of the container the airbags are in their uninflated state such that they will not obstruct the movement of items and/or item positioning means moving along the guide means.

Preferably the container comprises at least one walkway.

Preferably the or each walkway is located between two guide means.

Preferably the container comprises an upper walkway and a lower walkway.

Preferably the or each walkway allows the flow of gas to pass therethrough.

Ideally the access means comprises a passage or opening in a wall of the container.

Preferably the at least one access means is located in a side wall and/or an end wall of the container.

Preferably the wall has an access means through which items can enter the container.

Ideally at least one wall of the container comprises an access means.

Ideally an end wall of the container comprises an access means.

Preferably the container is a sealable container.

Ideally the access means is a sealable access means.

Ideally the access means comprises a door or a shutter.

Optionally the access means comprises a roller shutter.

Preferably the access means comprises a sealed door or shutter.

Preferably the access means comprises a seal means.

According to a second aspect of the invention there is provided a method as claimed in claim 14

The method comprises inflating the or each airbag. Advantageously, inflating the or each airbag ensures allows the airbag to form a sealed connection with an item within the container.

Ideally the method comprises deflating the or each airbag.

Preferably the method comprises inflating the or each airbag from a substantially uninflated state.

Preferably the method comprises deflating the or each airbag from a substantially inflated state.

Preferably the method comprises inflating the or each airbag after the container is sealed.

Preferably the method comprises inflating the or each airbag before the item is located within the container.

The method comprises inflating the or each airbag after the or each item is located within the container.

Preferably the method comprises inflating and/or deflating one or more airbags located around the opening in the container.

The method comprises inflating and/or deflating one or more elongate airbags.

The method comprises inflating and/or deflating one or more horizontal airbags.

Preferably the method comprises inflating and/or deflating one or more vertical airbags.

Preferably the method comprises inflating one or more airbags to an inflated state in which the or each airbag has a generally square, rectangular and/or trapezoidal cross section.

Preferably the method comprises inflating and/or deflating one or more foldable airbags.

Preferably the method comprises inflating one or more foldable airbags from an uninflated state in which the or each airbag is folded.

Preferably the method comprises inflating the or each airbag by inserting gas into the or each airbag.

Preferably the method comprises inflating the or each airbag by inserting air into the or each airbag.

Preferably the method comprises inflating the or each airbag by inserting a gas into the or each airbag via a connection aperture in the airbag.

Preferably the method comprises deflating the or each airbag by removing gas from the or each airbag.

Preferably the method comprises deflating the or each airbag by removing air into the or each airbag.

Preferably the method comprises deflating the or each airbag to a folded state. Advantageously, the or each airbag being in a folded state will mean that the airbag will occupy less space within the container.

Preferably the method comprises deflating the or each airbag by removing a gas from the or each airbag via an aperture in the airbag.

Preferably the method comprises controlling the inflation and/or deflation of the or each airbag using an airbag control means.

Preferably the method comprises preventing an item within the container from making contact with a wall of the container. Advantageously, ensuring that items do not contact the container wall prevents the items from being damaged by the walls.

Preferably the method comprises using an airbag to prevent an item within the container from making contact with a wall of the container.

Preferably the method comprises locating an item within the container such that one or more airbags are located between the item and a wall of the container.

Preferably the method comprises diverting a gas flow around one or more airbags.

Preferably the method comprises using one or more airbags to divert and/or guide a flow of gas towards one or more items within the container.

Preferably the method comprises using one or more inflated airbags to divert and/or guide a flow of gas towards one or more items within the container.

Preferably the method comprises using one or more inflated airbags to divert and/or guide a flow of gas such that the flow of gas passes, or is encouraged to pass through, over and/or around, one or more items within the container.

Preferably the method comprises using one or more airbags and/or material baffles to constrain a flow of gas within the container.

Preferably the method comprises using one or more inflated airbags to constrain a flow of gas within the container.

Preferably the method comprises using inflated airbags to exclude the flow of gas from a volume within the container.

The method comprises using airbags to exclude the flow of gas from the volume enclosed by the airbags.

The method is for storing an item of produce in a storage container.

Preferably the method is for storing an item of produce in a stationary container.

Optionally the method is for storing an item of produce in a mobile container.

Optionally the method is for storing an item of produce in a transportable container such as a shipping container or a trailer.

Optionally the method is for storing an item of produce in a container which forms part of a vehicle such as a lorry, truck or heavy goods vehicle.

Preferably the method is for storing an item of produce in a ripening room.

Ideally the method is a method of storing and ripening produce.

Preferably the method is a method of storing and ripening fruit such as bananas, mangoes, papayas, pears, apricots, guavas, melons, tomatoes and/or green chilies.

Preferably the method is a method of storing and reddening fruits such as tomatoes.

Ideally the step of locating an item within the container comprises locating one or more items of produce within the container.

Ideally the step of locating an item within the container comprises locating crates of produce within the container.

Ideally the step of locating an item within the container comprises locating one or more pallets within the container.

Ideally the step of locating an item within the container comprises transporting the item to the container.

Preferably the step of locating an item within the container comprises moving the item through an access means through which an item can enter and/or exit the container.

Preferably the step of locating an item within the container comprises moving the item into and/or within the container.

Preferably the step of locating an item within the container comprises moving the item into and/or within the container using a guide means.

Preferably the step of locating an item within the container comprises moving the item into and/or within the container along one or more tracks or guide rails.

Preferably the step of locating an item within the container comprises positioning the item into and/or within the container using an item positioning means.

Preferably the step of locating an item within the container comprises positioning the item into and/or within the container using an electrically-operated item positioning means.

Preferably the step of locating an item within the container comprises positioning the item into and/or within the container using a robotic item positioning means. Advantageously, use of a robotic positioning means allows the container to be loaded automatically.

Preferably the step of locating an item within the container comprises transporting an item along the guide means using a robot.

Optionally the step of locating an item within the container comprises positioning the item into and/or within the container using a manual item positioning means.

Preferably the step of inflating an airbag within the container comprises inflating an airbag with a pump or fan.

Preferably the step of inflating an airbag within the container comprises inflating an airbag such that the airbag extends into the interior of the container.

Preferably the step of inflating an airbag within the container comprises inflating an airbag until it meets a surface of an item within the container.

Preferably the step of inflating an airbag within the container comprises inflating the airbag to seal a plenum within the container.

Preferably the method is for storing items of produce in a sealed container.

Preferably the method comprises sealing the container. Advantageously sealing the container allows a user to ensure that the atmosphere within the container is suitable for ripening.

Preferably the method comprises sealing the access means.

Ideally the method comprises controlling the atmosphere within the container.

Preferably the method comprises operably connecting the container to a source of ripening agent, such as a gas canister.

Preferably the method comprises operably connecting the container to a source of ethylene gas.

Preferably the method comprises injecting ripening agent into the container.

Preferably the method comprises injecting ethylene gas into the container.

Preferably the method comprises creating a flow of gas within the container.

Preferably the method comprises creating a flow of gas within the container after the container has been sealed.

The method comprises activating a gas flow generation means to create a flow of gas within the container.

Preferably the method comprises activating a gas flow generation means to create a flow of ripening agent within the container.

Preferably the method comprises activating a gas flow generation means to create a flow of ethylene gas within the container.

The method comprises activating a gas flow generation means to create a flow of gas through a gas flow guide means.

Preferably the method comprises activating a gas flow generation means to create a flow of gas through one or more plenums.

Preferably the method comprises generating a plurality of gas flows within the container.

Preferably the method comprises generating a flow of gas which passes items within the container.

Preferably the method comprises generating a flow of gas which passes produce within the container.

Preferably the method comprises generating a flow of ethylene gas and air past the produce located within the container.

According to a third aspect not forming part of the invention there is provided an inflatable airbag for a container for storing produce, the airbag being adapted for engaging an item within the container to define a separation between the item and the at least one wall of the container. Advantageously, the airbag is adapted to occupy a space adjacent to a wall of the container, thereby excluding e.g. the item or a flow of gas from this space within the container.

Ideally the airbag is an elongate airbag.

Preferably the airbag is adapted for sealing a plenum.

Preferably the airbag has a generally square cross section.

Preferably the airbag has a generally square cross section, in its inflated state.

Preferably the airbag is constructed from multiple panels that are stitched, welded and/or bonded.

Preferably the airbag is adapted to allow gas to flow around the airbag.

Preferably the airbag is adapted to guide a gas flow within a container.

Preferably the airbag is adapted to act as a cushion for an item within the container.

Preferably the airbag is adapted to prevent an item within the container from making contact with a wall of the container. Advantageously, the airbag is able to prevent items within the container from becoming damaged by the wall of the container, for example during transport.

Preferably the airbag is locatable between an item within the container and a wall of the container.

Preferably the airbag has an inflated state.

Preferably the airbag, when in the inflated state, has an increased volume.

Preferably the airbag, when in the inflated state, is substantially filled with a gas such as air.

Preferably the airbag has an uninflated state.

Preferably the airbag, when in the uninflated state, has a reduced volume.

Preferably the airbag, when in the uninflated state, is substantially empty of gas such as air.

Preferably the airbag is a foldable airbag.

Preferably the airbag, when in the uninflated state, is folded. Advantageously, in the folded state the airbag does not bunch up and therefore occupies less room.

Preferably the airbag is a self-folding airbag.

Preferably the airbag has an internal surface.

Preferably the airbag comprises one or more segments.

Preferably the airbag comprises a plurality of segments.

Ideally the airbag comprises internal support means.

Preferably the or each segment is separated by internal support means. Advantageously, the internal support means increases the overall strength of the airbag.

Preferably the internal support means is attachable to an internal surface of the airbag.

Preferably the airbag comprises internal support means attachable to an internal surface of the airbag.

Preferably the or each airbag comprises internal support means attachable to an internal surface of the airbag.

Preferably the internal support means comprises one or more internal baffles.

Preferably the internal support means comprises a plurality of internal baffles.

Preferably the or each internal support means comprises one or more apertures.

Preferably the or each internal baffle comprises one or more apertures.

Preferably the or each internal baffle comprises two apertures.

Preferably the or each aperture is configured to allow gas such as air to flow through the interior of the airbag. Advantageously, the presence of the apertures allows gas to travel throughout the entire airbag, ensuring even inflation.

According to a fourth aspect not forming part of the invention there is provided a container for storing produce, the container comprising: at least one wall defining a boundary of the container; at least one access means through which an item can enter and/or exit the container; and at least one inflatable airbag for engaging an item within the container.

According to a fifth aspect not forming part of the invention there is provided a control system for controlling the operation of a container.

According to a sixth aspect not forming part of the invention there is provided a control system adapted to carry out a method for storing an item of produce in a container.

According to a seventh aspect not forming part of the invention there is provided a control system adapted to carry out a method for storing an item of produce in a container, the method comprising: locating an item within the container; and inflating an airbag within the container to define a separation between the item and at least a part of the container.

It will be appreciated that optional features applicable to one aspect of the invention can be used in any combination, and in any number. Moreover, they can also be used with any of the other aspects of the invention in any combination and in any number. This includes, but is not limited to, the dependent claims from any claim being used as dependent claims for any other claim in the claims of this application.

The invention will now be described with reference to the accompanying drawings which shows, by way of example only, embodiments of an apparatus and a method in accordance with the invention.
Figure 1 is a schematic cross-sectional view of a prior art container for storing produce.
Figure 2 is a schematic cross-sectional view of a container for storing produce according to an aspect of the invention.
Figure 3 is a perspective view of a container for storing produce according to an aspect of the invention.
Figure 4 is a further perspective view of a container for storing produce according to an aspect of the invention.
Figure 5 is a cutaway perspective view of a container for storing produce according to an aspect of the invention.
Figure 6 is a side view of a container for storing produce according to an aspect of the invention.
Figure 7 is a further side view of a container for storing produce according to an aspect of the invention.
Figure 8 is a perspective view of an airbag according to an aspect of the invention.
Figure 9a is a side view of an airbag according to an aspect of the invention.
Figure 9b is a side view of a support arrangement for use with aspects of the invention.
Figure 10 is a schematic view of a method according to an aspect of the invention.
Figure 11 is a schematic view of a control system according to an aspect of the invention.
Figure 12 is an end view of a robotic taxi.

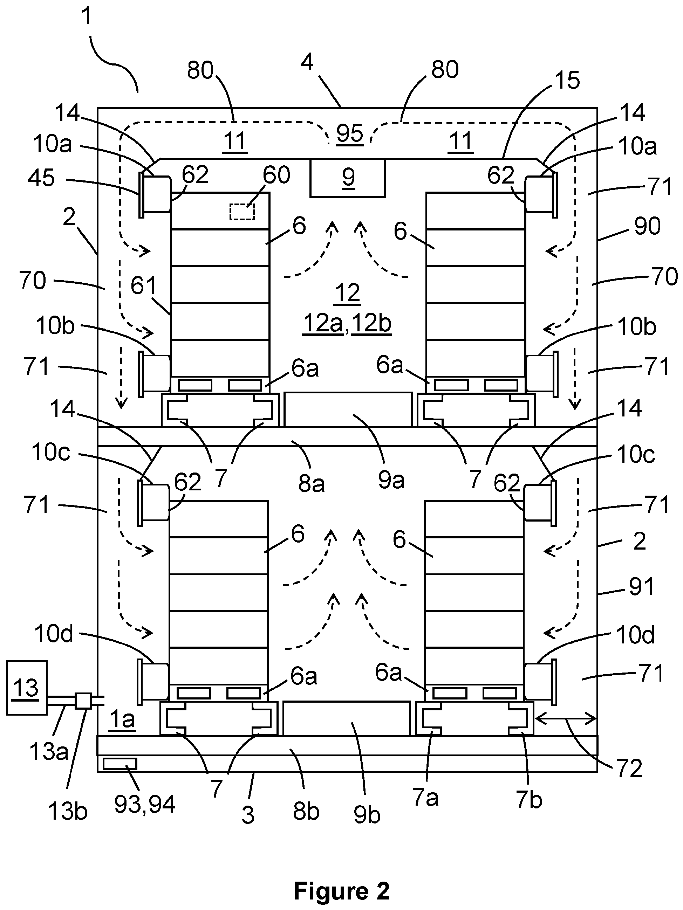

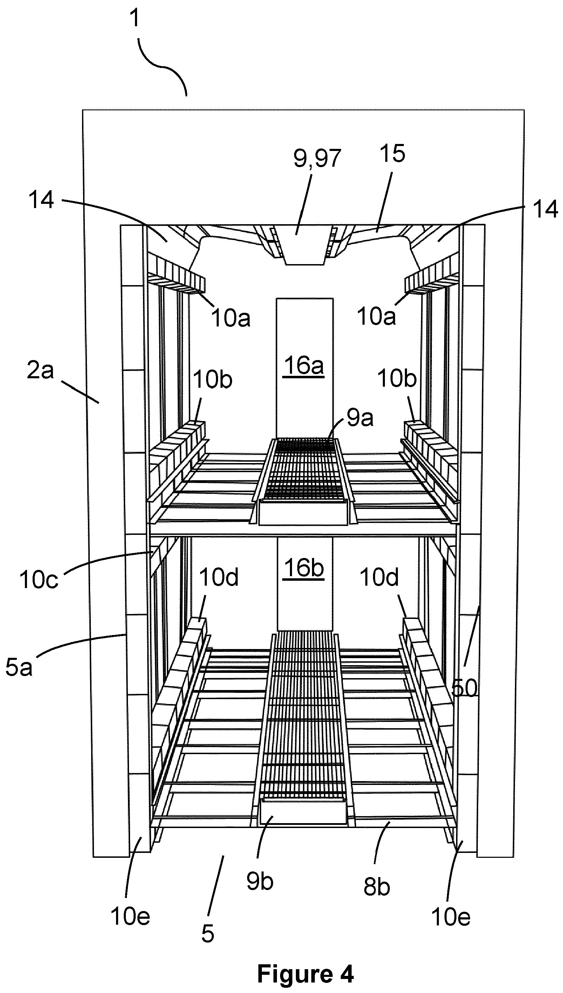

In figure 2 there is shown a cross-section through a container 1 for storing items of produce 60. The container 1 comprises: two side walls 2 extending between the floor 3 and the ceiling 4 of the container 1; an access means 5 (shown in e.g. figure 4) located in an end wall 2a of the container through which items can enter and/or exit the container 1; and a plurality of inflatable airbags 10a-10d. In figure 2 each airbag 10a-10d is shown engaging the side surfaces 61 of stacked crates of produce 6 within the container 1. Each airbag 10a-10d is shown in an inflated state defining a physical separation between a crate 6 and a side wall 2 of the container 1. Each airbag 10a-10d ensures that there is a space or gap 70 between the crates 6 and side walls 2 to prevent the crates 6 from contacting the side walls 2. Furthermore, each airbag 10a-10d ensures that gas 12 is able to flow along a path 80 between each crate 6 and each side wall 2, and prevents gas from flowing along a path where an airbag 10a-10d contacts a crate 6. As shown in figure 2, a gap 71 is formed between each airbag 10a-10d and the side walls 2 of the container 1 such that a gas flow generation arrangement 9 is operable to create a flow of gas 80 within gaps 71.

The container 1 is a stationary storage container 1, in particular a ripening room for ripening produce 60. In alternative embodiments the container 1 may be a mobile container, e.g. a transportable container such as a shipping container or a trailer, or a container that forms part of a vehicle such as a lorry, truck or heavy goods vehicle. The container 1 may be airtight and can be used to ripen fruit such as bananas, mangoes, papayas, pears, apricots, guavas, melons, tomatoes and/or green chilies, and/or for reddening fruits such as tomatoes. Such produce 60 is locatable in the crates 6.

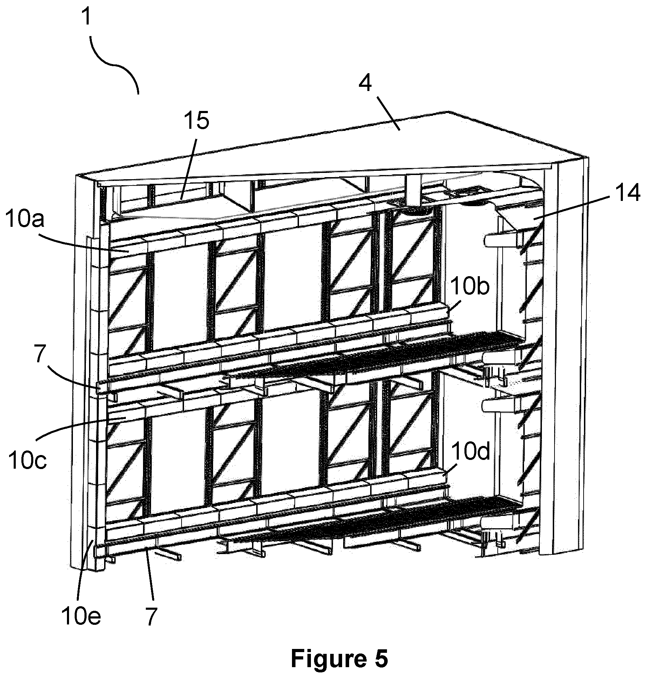

The container 1 is a two-storey container having two levels 90,91 on which e.g. crates 6 of produce 60 can be located. The crates 6 are stacked on pallets 6a in the container 1. The pallets 6a are located on C-shaped channel sections 7, which are in turn located and fixed to supporting cross-members 8a and 8b. The container includes upper supporting cross members 8a and lower supporting cross members 8b. In the example of figure 2, two pairs of inward-facing C-shaped channel sections 7 are provided per level 90,91. Upper and lower walkways 9a and 9b, also attached to the respective upper and lower supporting cross members 8a and 8b, are located between each pair of C-shaped channel sections 7. The walkways 9a,9b allow an operative to walk through the container 1 between the stacked crates 6 of produce 60. Figure 4 shows doorways 16a and 16b in an end wall of the container 1 which allow operatives to enter the container 1 and access the walkways 9a,9b. While figures 2-7 disclose a two-storey configuration of container 1 it will be appreciated that a container having an alternative number of levels may be used. For example, a single-storey or three-storey container may be used.

In use, the crates 6 are loaded onto pallets 6a and the pallets 6a are loaded into the container 1. As will be explained in further detail below, the pallets 6a can be loaded into the container 1 using an automated system of robots 300 which can travel along and within the C-shaped channels 7. Channels 7 act as tracks or guide rails for the robots 300.

The container 1 comprises a gas flow generation arrangement 9 in the form of a plurality of ceiling-mounted fans 96. The fans 96 are 150-190 W fans and are adapted to cause the atmosphere 12 within the container 1 to flow. The gas flow generation arrangement 9 is located adjacent to the ceiling 4 of the container 1. The container 1 includes a gas flow guide arrangement 11 which is used to guide the flow of gas within the container 1. The gas flow guide arrangement 11 includes a guide 15 for guiding part of a flow of gas 80 and evaporators (not shown) for cooling the gas flowing through the guide 15.

In use, the container 1 has a controlled atmosphere 12 comprising a ripening agent 12a, such as ethylene gas, and air 12b. In the example of figure 1 the container 1 is shown operably connected to a source of ethylene gas 12a i.e. a gas canister 13. The gas canister 13 is connected to the interior 1a of the container 1 by a conduit 13a and a valve 13b. As will be appreciated in optional embodiments the canister 13, conduit 13a and/or valve 13b may be located inside the container 1.

During operation of the gas flow generation arrangement 9 the atmosphere 12 within the container 1 is caused to flow, i.e. a flow of gas 80 is created. A plenum 95 i.e. a space through which the gas flows, is formed by the gas flow guide arrangements 11/guides 15, the side walls 2 and/or ceiling 4 of the container 1, the airbags 10a-10d, the material baffles 14 and the crates 6. The airbags 10a-10d are inflated into contact with the side surfaces 61 of the crates 6, such that seals 62 are formed between the airbags 10a-10d and the side surfaces 61 of the crates 6. As will be explained in further detail below, the seals 62 ensure that the flow of gas 80 passes through (rather than above or below) the crates 6.

As shown by the dashed lines in figure 2, the flow of gas 80 passes through the gas flow generation arrangement 9 and into the gas flow guide arrangements 11 along a direction substantially parallel to the ceiling 4 of the container 1. On reaching a side wall 2 of the container 1, the flow of gas 80 turns to pass between the side walls 2 and material baffles 14, before passing between the side walls 2 and airbags 10a-10d, and through the crates 6 and back towards the gas flow generation arrangement 9. As the flow of gas 80 passes through the crates 6 the atmosphere 12, including ethylene gas 12a, flows around the produce 60 in the crates 6 to encourage even ripening. After the flow of gas 80 passes through the location of the crates 6 it is drawn back towards the gas flow generation arrangement 9 where the process begins again. As will be appreciated the atmosphere 12 within the container 1 can be caused to flow in either direction through the gas flow generation arrangement 9, gas flow guide arrangement 11, etc.

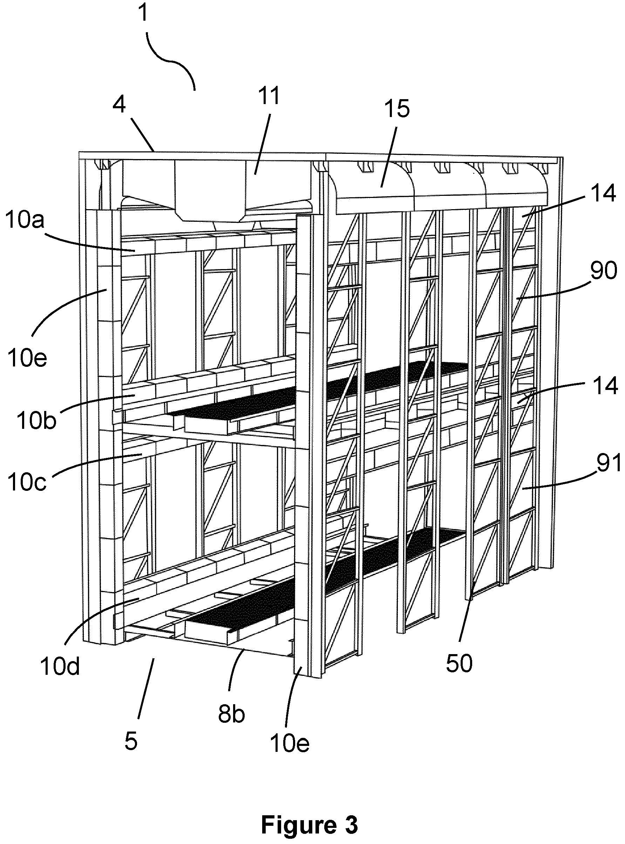

The gas flow guide arrangement 11 guides the flow of gas 80 as it moves towards the side walls 2. As shown in figure 3, the gas flow guide arrangement 11 comprises one or more guides 15 which guide the flow of gas 80 as it leaves the gas flow generation arrangement 9. The flow of gas 80 travels along the side walls 2 and the guides 15 cause the flow of gas to change direction to be parallel with the side walls 2. As the flow of gas exits the guides 15, the flow of gas 80 passes between the side walls 2 and the material baffles 14, and then in the gaps 71 between the upper airbags 10a/supporting frames 50 and the side walls 2. The flow of gas 80 travels along the side walls 2 towards the floor 3, and is able to pass through the gaps 71 formed between each airbag 10a-10d and the side walls 2.

The flow of gas 80 through the crates 6 is ensured by arrangements within the container 1 which are used to form and seal the plenum 95, particularly the gas flow guide arrangement 11, the airbags 10a-10d (which form seals 62 with the side surfaces 61 of the crates 6) and the material baffles 14. The upper airbags 10a and 10c and material baffles 14 prevent the flow of gas from passing over the crates 6. The lower airbags 10b and 10d, material baffles 14, flashing 45 and/or C-shaped guide rails 7 prevent the flow of gas from escaping underneath the pallets 6a/crates 6. The purpose of the airbags 10a-10d is to create seals 62 around the pallets of produce, to block off the paths of least resistance so that gas flowing through the ceiling-mounted fans 96 is forced/drawn through the boxes of produce 6, as opposed to under or over the crates 6. This encourages the produce 60 within the crates 6 to ripen evenly. The arrangements within the container 1 stop short cycling of the air flow distribution in order to increase the pressure of the gas flow through the crates 6.

On the upper level 90 of the container 1, gas 12 can flow towards the crates 6 in the space between the upper and lower airbags 10a,10b. Similarly, on the lower level 91, gas 12 can flow towards the crates 6 in the space between the upper and lower airbags 10c,10d. Material baffles 14 on the lower level again prevent the flow of gas from passing over the crates 6 and flashing 45 and/or C-shaped guide rails 7 prevent the flow of gas from escaping underneath the pallets 6a on the lower level 91. The distance between the airbags 10a and 10b and/or 10c and 10d can be adjusted to accommodate e.g. different heights of stacked crates 6, or different heights of containers 1. If the airbags 10a-10d are moved to different heights above the floor 3 or supports 8a,8b, the material baffles 14 can be lengthened or shortened accordingly.

The airbags 10a-10d, in their inflated state, are adapted to exclude the flow of gas from a volume within the container 1, i.e. the volume that is enclosed by the airbags 10a-10d themselves. The airbags 10a-10d are located such that they touch the crates 6 and thereby prevent the flow of gas from avoiding the crates 6. In this way the airbags 10a-10d divert the flow of gas 80 within the container 1. The airbags 10a-10d encourage the flow of gas 80 to pass generally through the stacked crates 6 and prevent the flow of gas 80 from flowing along a path where the flow of gas 80 would not encounter the crates 6/produce 60. Each airbag 10a-10d is adapted to occupy a space adjacent to a side wall 2, thereby excluding e.g. an item or a flow of gas from this space within the container.

Each airbag 10a-10d is inflatable i.e. it can be inflated from a substantially uninflated state using a supply of gas such as air. When in its uninflated state, each airbag 10a-10d has a reduced volume and is substantially empty. In the uninflated state each airbag 10a-10d is folded against an adjacent support structure 50 such that pallets 6a having crates 6 can be moved into the container 1 along the rails 7. During loading of the container 1 the airbags 10a-10d are in their uninflated state such that they will not obstruct the movement of the crates 6/pallets 6a along the rails 7.

The container 1 comprises an airbag control arrangement 93. The airbag control arrangement 93 comprises a pump or fan 94. Each airbag 10a-10e is operably connected to the airbag control arrangement 93, particularly the pump or fan 94. The pump or fan 94 is adapted to pump air into and/or out of the or each airbag 10a-10e. The airbag control arrangement 93 is in operable communication with each airbag 10a-10e and is adapted to control the level of inflation of each airbag 10a-10e.

As each airbag 10a-10d is inflated it extends towards items within the container 1, particularly the side surfaces 61 of the crates 6. The horizontal airbags 10 are mounted adjacent to the side walls 2 and extend into the container 1 as they are inflated. Once the container 1 is fully loaded with pallets 6a/crates 6, each airbag 10a-10d is inflated until it makes contact with a side wall 61 of a crate 6 and a seal 62 is formed therebetween. When inflated, each airbag 10a-10d has an increased volume and is substantially filled with a gas such as air.

The airbags 10a-10d are able to accommodate various pallet orientations and pallet widths. The pallets 6a/crates 6 do not need to be moved towards the sidewall of the container 1 during loading i.e. when forming seals 62. Instead it is the airbags 10a-10d which move in order to form the seals 62. The pallets 6a/crates 6 can simply be moved laterally along the guide rails 7 and the airbags 10a-10d move towards the centre of the container 1 as the airbags 10 are inflated, thereby providing the required sealing at the side surfaces 61 of the stacked crates 6.

Each pair of guide rails 7 includes an interior guide rail 7a and an exterior guide rail 7b. The exterior guide rail 7b is that guide rail of each pair which is closest to a side wall 2. The guide rails 7 are located in a fixed position within the container 1. Each exterior guide rail 7b is located a fixed distance 72 from the side walls 2 of the container 1. This distance 72 is chosen such that the pallets 6a/crates 6 can move freely along the guide rails 7 while the airbags 10a-10d are uninflated, and such that the airbags 10a-10d can meet the side surfaces 61 of the pallets when the airbags 10a-10d are inflated to form seals 62.

Figures 3 to 5 show perspective views of the container 1. The container 1 comprises an access arrangement 5 in the form of an opening in the container 1. Items can be located in the container 1 via this opening 5. The opening 5 can be sealed by closing a door, shutter or roller shutter (not shown) over the opening 5. Vertical airbags 10e are located on either side of the access arrangement 5 and can be inflated to help seal the edges 5a of this arrangement 5. The container 1 is a sealable container i.e. it is possible to seal a controlled atmosphere 12 within the container 1. The improved air seal provided by the present system provides more even ripening and reduces the load on any evaporator fans.

As shown most clearly in figures 3 to 6, the container 1 comprises a plurality of horizontal airbags 10a-10d and vertical airbags 10e. Each airbag 10a-10e is an elongate airbag. The horizontal airbags 10a-10d extend in a horizontal direction that is substantially parallel to the side walls 2 and ceiling 4 of the container 1. In the example shown in the figures upper and lower sets of horizontal airbags are provided in each storey 90,91 of the container 1. The mounting arrangement of the airbags 10a-10d preserves direct access to evaporators 97 for cleaning and maintenance.

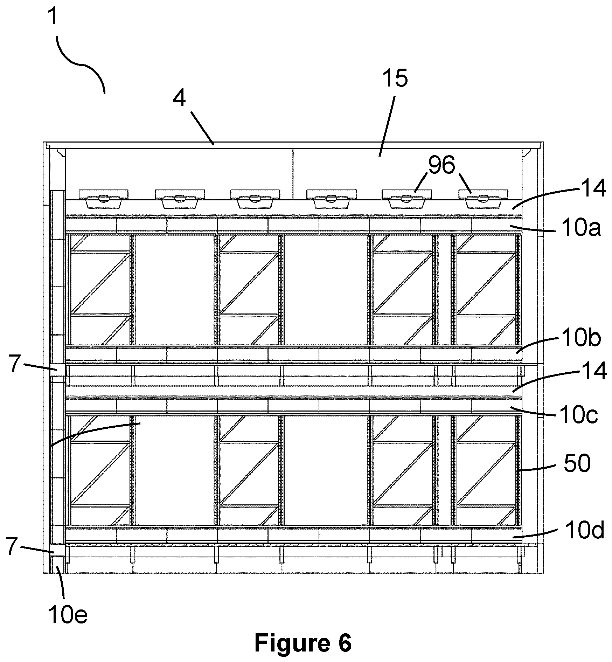

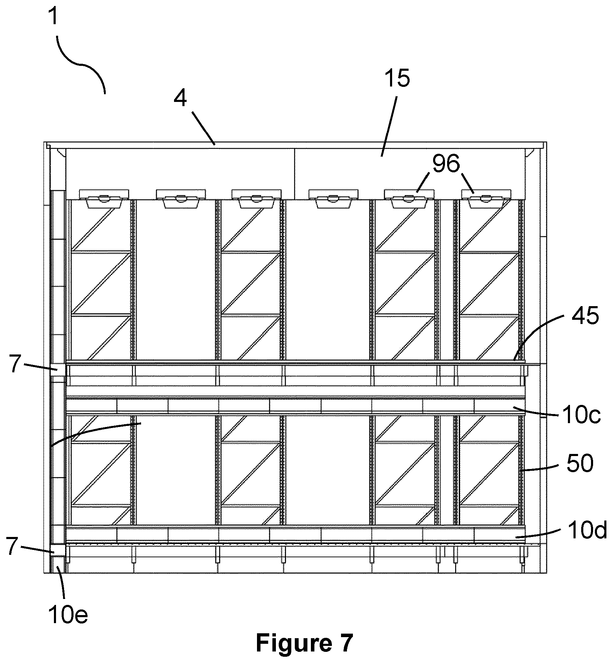

Figure 6 shows a side view of the interior of the container 1. Figure 7 is a similar view to figure 6 but with the horizontal airbags 10a,10b on the upper level removed to show flashing 45 more clearly. Figure 7 shows metal flashing 45 located behind the airbags 10a,10b on the support frame 50. The flashing 45 is used to support and reinforce the airbags 10a-10d.

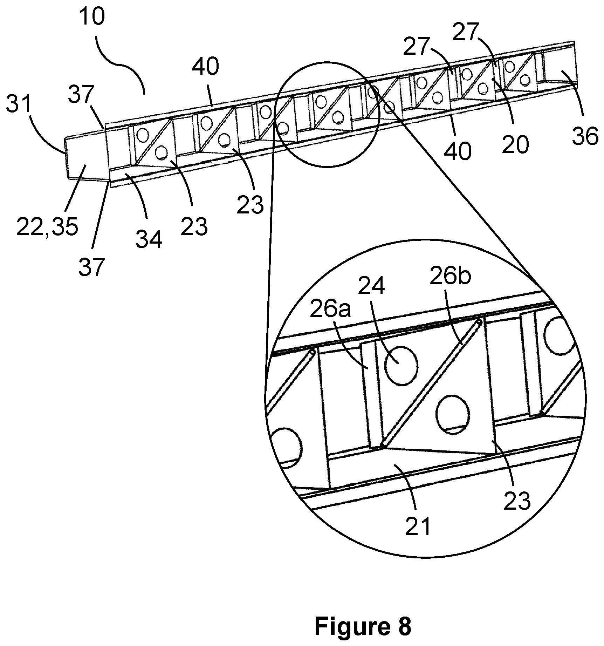

Figure 8 shows an example of an airbag 10 for use as an airbag 10a-e within the container 1. The airbag 10 shown in figure 8 is adapted for engaging an item within the container 1 to define a separation between the item and a wall of the container 1. The airbag 10 is inflatable i.e. it can be inflated from a substantially uninflated state using a supply of gas such as air. In its inflated state the airbag 10 has an increased volume and is substantially filled with a gas such as air. In contrast, when the airbag is in its uninflated state it has a reduced volume and is substantially empty. In the uninflated state the airbag is folded, the airbag 10 being a self-folding airbag. By folded it is meant that portions of the airbag 10 overlap each other, the overlapping portions being substantially parallel to one another.

The airbag 10 is constructed from multiple panels of fire-rated material that are stitched, welded and/or bonded together to form a flexible airbag 10. The material is ideally M2/B1 or M1/B1 material and is ideally UV-resistant and tear resistant. M1/B1 is the European flame retardant standard for contract drapery allowing the airbag 10 to be used safely in a commercial environment.

The airbag 10 has an internal surface 21 and a wipe-clean external surface 22. The airbag 10 includes a front wall 31, a back wall 32 (not shown in figure 8), an upper wall 33, a lower wall 34, and two peripheral end walls 35 and 36. Each wall is constructed from a single panel of material. Lighter, more flexible material is used at the ends 35,36 of the airbag 10 to allow for improved folding and reduce bunching, and to achieve satisfactory clearance. The airbag 10 is elongate and has a reduced cross-section compared with prior art airbags. This means that the airbag 10 requires less air for inflation and hence places a lower energy demand on airbag fans.

The airbag 10 comprises multiple segments 27, each segment 27 being delimited by an internal support arrangement 20 attached to the internal surface 21 of the airbag 10. The internal support arrangement 20 comprises a plurality of internal baffles 23 which provide structure to the airbag 10. The airbag 10 comprises a single connection aperture (not shown) which can be operably connected to the airbag control means 93, particularly pump or fan 94, for inflation and/or deflation during use.

In the inflated state, the airbag 10 has a generally square, rectangular or trapezoidal cross section, due to the generally square, rectangular or trapezoidal shape of the peripheral end walls 35, 36 and the internal baffles 23. The internal baffles 23 limit the extent to which the airbag 10 can expand. The internal baffles 23 limit the extent to which the airbag 10 can extend in the lateral direction, i.e. the direction corresponding to the distance between the front wall 31 and the back wall 32, when inflated. Each internal baffle 23 comprises two apertures 24 to allow gas such as air to flow through the interior of the airbag 10 along the entire length of the airbag 10. Each internal baffle 23 is substantially rectangular or trapezoidal in shape.

Each internal baffle 23 includes a first reinforcement member 26a which is located at the position where the internal baffle 23 is joined to the front wall 31. Each internal baffle 23 has a diagonal fold line 25 where it is reinforced with a second elongate reinforcement member 26b. Each reinforcement member 26a,26b is an 8 mm fiberglass rod fixed inside a pocket which is in turn stitched to the interior of the airbag 10. The diagonal rod 26b pulls the face of the airbag 10 down during deflation, resulting in a controlled, even, neat fold in which the rods 26a and 26b move to be substantially adjacent to one another. Without the reinforcement members, the airbag 10 would crumple and bunch, resulting in less clearance between the deflated bag and the pallets/crates moving within the container 1.

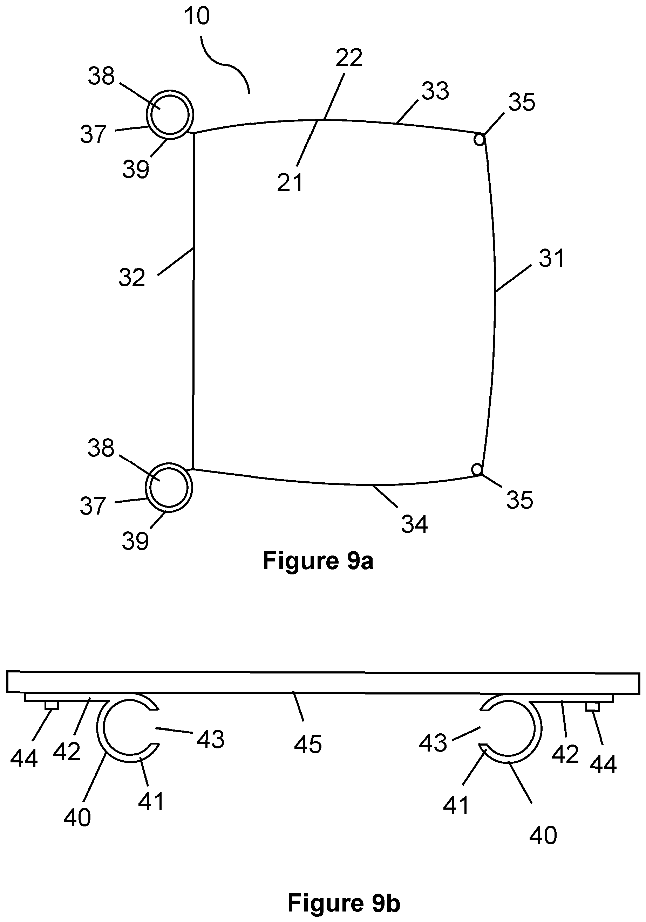

As shown in figure 9a, the airbag 10 includes two attachment portions 37 for attaching the airbag 10 to support arrangements 40 within the container 1 (see figure 9b). Each attachment portion 37 comprises an elongate rod 38 which is attached to the walls of the airbag 10 via a loop of material 39. Each elongate rod 38 is located inside a respective loop of material 39 and each loop of material 39 is stitched, welded and/or bonded at a location adjacent to the joins between the back wall 32 and the neighboring walls of the airbag 10.

The airbag 10 further includes reinforcing members 35. The reinforcing members 35 are elongate rods that reinforce the airbag 10 at locations near the corners between the front wall 31 and the neighboring upper and lower walls 33,34. The reinforcing members 35 ensure that the airbag 10 folds properly and does not bunch up along its length when the airbag 10 is in the deflated state.

Each attachment portion 37 forms an elongate member which can be attached to an elongate support member 40, shown in figure 9b. Each support member 40 comprises a channel portion 41 and a planar fixing portion 42. The fixing portion 42 allows the support member 40 to be fixed to flashing 45 via fixings 44 such as screws. The flashing 45 is attachable to the support frame 50 within the container 1. Alternatively the support member 40 may be directly attached to the support frame 50. The channel portion 41 has an opening 43 that is adapted (i.e. sized and/or shaped) to receive an attachment portion 37. The channel portion 41 is an elongate channel in which an attachment portion 37 fits. Each airbag 10 is attached to a support member 40 by sliding the attachment portion 37 through the channel 41. As each airbag 10 has two attachment portions 37, each airbag 10 can be securely held in position within the container using two support members 40.

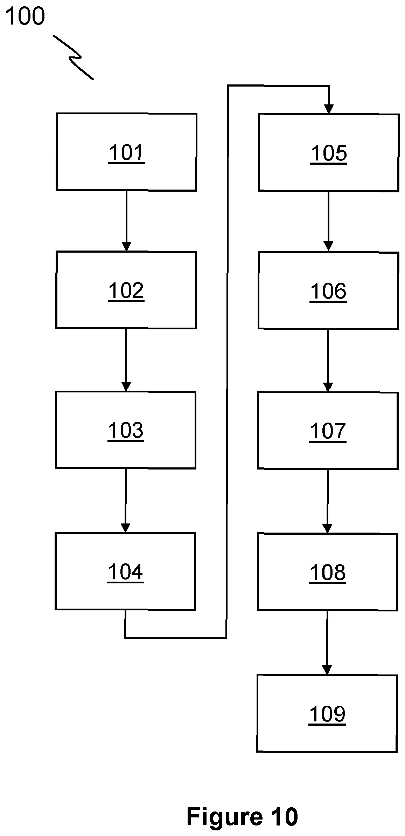

Figure 10 discloses a method 100 for storing an item of produce in a container 1 such as a ripening room. The method 100 comprises the steps of: opening the container 1 (step 101); locating an item within the container (step 102); closing the container 1 (step 103); inflating at least one airbag 10 within the container 1 (step 104); controlling the atmosphere 12 within the container 1 (step 105); and generating a flow of gas 80 within the container 1 (step 106). In the disclosed embodiment, the method 100 comprises the additional steps of: deflating the least one airbag 10 within the container 1 (step 107); re-opening the container 1 (step 108); and removing the item from the container (step 109).

In step 101 the container 1 is opened to allow items to be moved into the container 1. In particular, the access arrangement 5, which comprises a sealable door or shutter, is moved to a position wherein crates of produce 6 can be moved into the container 1. In cases where the airbags 10a-10e are in an inflated state before the access arrangement 5 has moved to the open configuration, the airbags 10a-10e may be caused to deflate while the access arrangement 5 is moving.

In step 102 one or more items, in this example crates 6 of produce 60, are located within the container 1. In the preferred embodiments the crates of produce are carried into the container 1 on pallets 6a, however the system is also compatible with an automated taxi system in which the container 1 is moved to the pallets 6a. The pallets 6a and crates 6 are first transported to the container 1 for loading. The pallets and crates are then moved through the access arrangement and into the interior of the container 1. This movement of the pallets 6a and crates 6 into the interior of the container can be carried out using manual methods such as using a pallet truck or a forklift. In preferred embodiments this step is carried out in an automated loading process by robotic taxis 300.

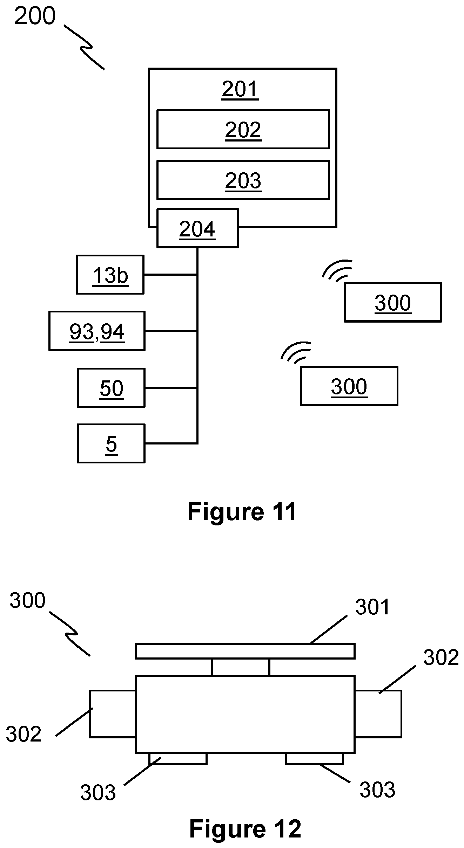

As shown in e.g. figure 2, the container 1 comprises guide rails in the form of pairs of C-shaped channel members 7 which are suitably sized to accommodate the wheels 302 of a robotic taxi, shown in figure 12. The robot 300 is able to travel along the C-shaped channels 7. The robot 300 has an upper table 301 which can be moved up and down so as to engage with an item, in this example the pallets 6a on which the crates 6 are loaded.

The control system 200 may send a command to the robot 300 to pick up a pallet 6a located outside the container 1 and place it in an appropriate position within the container 1. Commands may be sent wirelessly. After the command has been received, the robot 300 travels to the pallet 6a. The robot 300 picks up the pallet 6a from underneath by passing underneath the pallet and lifting the table 301 and thereby engaging the lower surface of the pallet 6a. The table 301 is lifted to an appropriate height that will allow the lower surface of the pallet 6a to pass over the top surface of the C-shaped channels 7. Once the pallet 6a has been lifted, the robot 300 carries the pallet 6a to the container 1. The robot 300 may enter a lift in order to locate one or more pallets on the upper level 90. The robot 300 and pallet 6a enter the container via the entrance 5. The robot 300 travels along the C-shaped channel and carries the pallet 6a to an appropriate location within the container 1. Once the pallet 6a reaches the ideal position the table 301 is lowered so that the table 301 no longer engages the underside of the pallet 6a. The pallet 6a is lowered until it rests on the upper surfaces of two C-shaped channels 7. Once the pallet has disengaged from the table 301, the robot 300 is able to pass freely underneath the pallet 6a and out of the container 1 along the C-shaped channels 7. The robot 300 exits the container via the entrance 5. The robot 300 may include additional wheels 303 to enable it to travel on the ground outside the container 1. The process of placing items in the container 1 is repeated as often as necessary e.g. until the container 1 is full. In some embodiments the container 1 may have capacity for 60 pallets.

During loading/unloading of pallets 6a/crates 6, each airbag 10a-10e is in its uninflated state and each horizontal airbag 10a-10d is folded against an adjacent support structure 50. This allows the pallets 6a/crates 6 to be moved into and out of the container 1 along the rails 7 without being obstructed by the airbags 10a-10d.

In step 103 the container is closed i.e. the door or shutter is moved to a closed position and the container is sealed. This operation can take up to 60 seconds. Step 103 is carried out after a sufficient number of pallets 6a have been placed into the container 1.

In step 104 the airbags 10 within the container 1 are inflated. Each airbag 10 is inflated from a substantially uninflated/deflated state by inserting gas such as air into the airbags 10 via apertures in each airbag 10. As the airbags 10 are inflated they extend towards the items loaded within the container 1. The surface of each horizontal airbag 10 moves to meet an adjacent item, thereby providing a seal 62 between the airbag 10 and the item. This means that the pallets 6a/crates 6 can simply be moved laterally along the guide rails 7 in step 102 and the airbags 10a-10d move to meet the items as they are inflated in step 104, thereby providing the seals 62. No re-adjustment of the position of the crates 6/pallets 6a is required after the airbags 10 are inflated.

A pump or fan 94 is used to provide the air to the airbags during inflation. The operation of the pump or fan 94 is controlled by a control computer 201. The airbags 10a-10e take approximately 60 seconds to reach their inflated state. Once in their inflated state, the airbags 10a-10e may have a generally square, rectangular or trapezoidal cross section. The vertical and horizontal airbags 10a-10e within the container 1 may be inflated simultaneously or in a specific order. For example, the vertical airbags 10e may be inflated after the horizontal airbags 10a-10d have been inflated and after items have been loaded. Before inflation, the airbags 10a-10e are folded.

In step 105 the atmosphere 12 within the container 1 is controlled. This step preferably involves introducing e.g. a ripening agent 12a into the container 1. Ideally ethylene gas (C₂H₄) is introduced from a gas canister 13 by opening valve 13b. The opening of valve 13b may be automatically performed by the control system 200. The concentration of ethylene gas 12a in atmosphere 12 is 50-1000 ppm, most preferably 400 ppm. Additionally CO₂ and/or N₂ may be introduced into the atmosphere 12 of the container 1. The atmosphere 12 in the container 1 may also be cooled using evaporators 97. Controlling the atmosphere in step 105 allows the method to be applied to the ripening of fruit such as bananas, mangoes, papayas, pears, apricots, guavas, melons, tomatoes and/or green chilies.

In step 106 a flow of gas 80 is generated in the container 1. This step is preferably carried out after the container 1 has been sealed and after the atmosphere 12 has been suitably controlled. The gas flow generation arrangement 9 is activated to create a flow of gas 80 within the container 1. The gas flow 80 passes between the horizontal airbags 10a-10d and walls 2 of the container 1. The gas flow 80 passes into each crate 6 via e.g. the handles on opposing sides thereof, each handle being an open aperture in a side wall 61 of a crate 6. The gas flow 80 then travels past the items/produce 60 located within the crates 6/container 1. For ripening purposes the air flow through each crate 6 is 0.7-1.5 m³s⁻¹. The inflated airbags 10a-10d are used to seal the plenum 95 and to divert and/or guide the flow of gas 80 towards the items within the container 1. The flow of gas 80 passes, or is encouraged to pass through, over and/or around, one or more items within the container 1, particularly through the crates 6 via their open handles. The flow of gas 80 is excluded from the volume enclosed by the airbags 1. In use, no ripening agent flows within the volume of the or each airbag 10a-10e.

Step 106 is carried out for a suitable amount of time to allow the produce within the container 1 to ripen. Ideally the flow of gas 80 is stopped manually at the discretion of the ripener/operative by de-activating the gas flow generation arrangement 9. Alternatively, the flow of gas 80 can be generated for a limited amount of time and may be stopped automatically by the control system 200. Stopping the gas flow/fans 96 may be triggered by the opening of the doors 5.

In step 107 airbag pumps or fans 94 are switched on and the bags 10a-10e are deflated. This operation takes approximately 60 seconds. As the airbags 10a-10e deflate, they automatically fold due to their self-folding construction. In additional step 108 the doors 5 are opened. This step may be performed manually by an operative or automatically via computer control. Before the doors 5 are opened the seal may need to be broken and the container may need to be flushed with a supply of clean air. In additional step 109 items within the container 1 are removed. At this point the items of produce 60 will have substantially ripened. Step 109 can be performed manually by one or more operatives using e.g. a forklift, or can be performed using robots 300. The robots 300 may travel in the C-shaped channels 7 and be programmed or supplied with commands to substantially reverse the operations performed in step 102.

Figure 11 shows a control system 200 for controlling the operation of the container 1. The control system 200 is integrated with the overall container system 1. The control system 200 comprises a control computer 201 having a central processing unit 202 and a memory 203 storing instructions for carrying out the method 100. The control computer 201 has an interface 204 for connecting to components, such as components of the container 1 such as the access means 5. The interface 204 is connected to the valve 13b and the airbag control arrangement 93 including pump or fan 94. The interface 204 also allows connections, for example wireless connections, to the robots 300 used in steps 103 and 109. The control computer 100 is able to carry out one or more steps of the method in response to determining the status of the components to which it is connected. The control system 200 is adapted to send one or more commands to the components of the container 1, such as the access means 5, and the one or more robots 300.

As will be understood by the skilled person, the example embodiments presented above can be modified in a number of ways without departing from the scope of the invention. For example, the method 100 may be applied to storing any items in any suitable container such as a mobile container e.g. a transportable container such as a shipping container or a trailer. The method 100 can also be applied to storing an item of produce in a container which forms part of a vehicle such as a lorry, truck or heavy goods vehicle. Where the method 100 is to be used in a transportable container the purpose of the airbags is to protect the items from hitting the walls of the container during transit. The airbags 10 can have any suitable cross section as is appropriate for a particular application.

In the preceding discussion of the invention, unless stated to the contrary, the disclosure of alternative values for the upper or lower limit of the permitted range of a parameter, coupled with an indication that one of the values is more highly preferred than the other, is to be construed as an implied statement that each intermediate value of the parameter, lying between the more preferred and the less preferred of the alternatives, is itself preferred to the less preferred value and also to each value lying between the less preferred value and the intermediate value.

The features disclosed in the foregoing description or the following drawings, expressed in their specific forms or in terms of a means for performing a disclosed function, or a method or a process of attaining the disclosed result, as appropriate, may separately, or in any combination of such features be utilised for realising the invention in diverse forms thereof, in a manner as defined in the claims.

## Claims

1. A container (1) for storing produce (60), the container (1) comprising: a floor (3), a ceiling (4), and at least one side wall (2) extending between the floor and ceiling of the container and defining a boundary of the container; at least one access means (5) through which an item can enter and/or exit the container (1); a gas flow generation means (9) located adjacent the ceiling (4) of the container; a gas flow guide means (11); and at least one inflatable airbag (10a-10d) for engaging an item within the container (1) to define a separation between the item and the at least one side wall of the container, wherein the at least one airbag (10a-10d) comprise at least one horizontal airbag extending along the at least one side wall (2) of the container (1), wherein a gap is formed between the at least one horizontal airbag (10a-10d) and the at least one side wall of the container, wherein the gas flow generation means (9) is adapted to generate a flow of gas which is guided by the gas flow guide means (11) to flow within the gap formed between the at least one horizontal airbag (10a-10d) and the at least one side wall of the container, and wherein the flow of gas does not flow within the volume of the at least one airbag (10a-10d).

2. A container (1) according to claim 1 wherein the at least one horizontal airbag (10a-10d) comprises at least one horizontal airbag extending along an upper portion of the side wall (2) of the container (1) and at least one horizontal airbag extending along a lower portion of the side wall of the container.

3. A container (1) according to claim 1 or 2 wherein the container is a ripening room for ripening produce, wherein the container comprises a controlled atmosphere (12), wherein the controlled atmosphere comprises a ripening agent (12a).

4. A container (1) according to any preceding claim, wherein the or each airbag (10a-10d) is a self-folding airbag.

5. A container (1) according to claim 4, wherein the or each airbag (10a-10d) comprises internal support means (20) attachable to an internal surface (21) of the airbag.

6. A container (1) according to claim 5, wherein the or each internal support means (20) is substantially rectangular or trapezoidal in shape, wherein the or each internal support means comprises a fold line (25), wherein the or each internal support means is reinforced with at least one reinforcement member (26a, 26b).

7. A container (1) according to any preceding claim wherein the gas flow generation means (9) is operable to create a flow of gas past items located within the container.

8. A container (1) according to any preceding claim wherein the container comprises a plenum (95), wherein the or each airbag, in its inflated state, seals at least a portion of the plenum.

9. A container (1) according to any preceding claim wherein the or each airbag, in its inflated state, is adapted to exclude the flow of gas from a volume within the container.

10. A container (1) according to any preceding claim wherein the container comprises at least one support means (40,50) for supporting and locating the one or more airbags.

11. A container (1) according to any preceding claim wherein the container comprises at least one airbag (10e) which extends along a vertical development.

12. A container (1) according to any preceding claim comprising an airbag control means (93), wherein the or each airbag is operably connected to the airbag control means.

13. A container (1) according to any preceding claim wherein the container comprises guide means (7), wherein the guide means comprises tracks or guide rails (7).

14. A method for storing an item of produce in a container (1) according to any one of claims 1 to 13, the method comprising: locating an item within the container; inflating a horizontal airbag (10a-10d) within the container, the horizontal airbag extending along a side wall (2) of the container (1), wherein in its inflated state the horizontal airbag (10a-10d) defines a separation between the item and the side wall of the container; and activating a gas flow generation means (9) located adjacent the ceiling (4) of the container to create a flow of gas within the container, wherein the flow of gas is guided by a gas flow generation means (9) of the container to flow in a gap formed between the horizontal airbag (10a-10d) and the side wall of the container, and wherein the gas does not flow within the volume of the at least one airbag.

15. A method according to claim 14 wherein the step of locating an item within the container comprises transporting an item along guide means (7) using a robot (300).

## Patentansprüche

1. Behälter (1) zum Aufbewahren von Feldfrüchten (60), wobei der Behälter (1) Folgendes umfasst: einen Boden (3), eine Decke (4) und mindestens eine Seitenwand (2), die sich zwischen dem Boden und der Decke des Behälters erstreckt und eine Begrenzung des Behälters definiert; mindestens eine Zugriffseinrichtung (5), durch die ein Gegenstand in den Behälter (1) eintreten und/oder aus diesem austreten kann; eine Gasstromerzeugungseinrichtung (9), die an die Decke (4) des Behälters angrenzend angeordnet ist; eine Gasstromführungseinrichtung (11) und mindestens einen aufblasbaren Airbag (10a-10d) zum Eingreifen in einen Gegenstand innerhalb des Behälters (1), um eine Trennung zwischen dem Gegenstand und der mindestens einen Seitenwand des Behälters zu definieren, wobei der mindestens eine Airbag (10a-10d) mindestens einen horizontalen Airbag umfasst, der sich entlang der mindestens einen Seitenwand (2) des Behälters (1) erstreckt, wobei ein Spalt zwischen dem mindestens einen horizontalen Airbag (10a-10d) und der mindestens einen Seitenwand des Behälters ausgebildet ist, wobei die Gasstromerzeugungseinrichtung (9) dazu eingerichtet ist, einen Gasstrom zu erzeugen, der durch die Gasstromführungseinrichtung (11) geführt wird, innerhalb des Spalts zu strömen, der zwischen dem mindestens einen horizontalen Airbag (10a-10d) und der mindestens einen Seitenwand des Behälters ausgebildet ist, und wobei der Gasstrom nicht innerhalb des Volumens des mindestens einen Airbags (10a-10d) strömt.

2. Behälter (1) nach Anspruch 1, wobei der mindestens eine horizontale Airbag (10a-10d) mindestens einen horizontalen Airbag, der sich entlang eines oberen Abschnitts der Seitenwand (2) des Behälters (1) erstreckt, und mindestens einen horizontalen Airbag, der sich entlang eines unteren Abschnitts der Seitenwand des Behälters erstreckt, umfasst.

3. Behälter (1) nach Anspruch 1 oder 2, wobei der Behälter ein Reifungsraum zum Reifen von Feldfrüchten ist, wobei der Behälter eine kontrollierte Atmosphäre (12) umfasst, wobei die kontrollierte Atmosphäre ein Reifungsmittel (12a) umfasst.

4. Behälter (1) nach einem der vorhergehenden Ansprüche, wobei der oder jeder Airbag (10a-10d) ein selbstfaltender Airbag ist.

5. Behälter (1) nach Anspruch 4, wobei der oder jeder Airbag (10a-10d) interne Stützeinrichtungen (20) umfasst, die an einer Innenfläche (21) des Airbags angebracht werden können.

6. Behälter (1) nach Anspruch 5, wobei die oder jede innere Stützeinrichtung (20) im Wesentlichen rechteckig oder trapezförmig ist, wobei die oder jede innere Stützeinrichtung eine Faltlinie (25) umfasst, wobei die oder jede innere Stützeinrichtung mit mindestens einem Verstärkungselement (26a, 26b) verstärkt ist.

7. Behälter (1) nach einem der vorhergehenden Ansprüche, wobei die Gasstromerzeugungseinrichtung (9) dazu funktionsfähig ist, einen Gasstrom an innerhalb des Behälters befindlichen Gegenständen vorbei zu erzeugen.

8. Behälter (1) nach einem der vorhergehenden Ansprüche, wobei der Behälter eine Kammer (95) umfasst, wobei der oder jeder Airbag im aufgeblasenen Zustand zumindest einen Abschnitt der Kammer abdichtet.

9. Behälter (1) nach einem der vorhergehenden Ansprüche, wobei der oder jeder Airbag im aufgeblasenen Zustand dazu eingerichtet ist, den Gasstrom aus einem Volumen innerhalb des Behälters auszuschließen.

10. Behälter (1) nach einem der vorhergehenden Ansprüche, wobei der Behälter mindestens eine Stützeinrichtung (40,50) zum Abstützen und Positionieren des einen oder der mehreren Airbags umfasst.

11. Behälter (1) nach einem der vorhergehenden Ansprüche, wobei der Behälter mindestens einen Airbag (10e) umfasst, der sich entlang einer vertikalen Entwicklung erstreckt.

12. Behälter (1) nach einem der vorhergehenden Ansprüche, umfassend eine Airbagsteuereinrichtung (93), wobei der oder jeder Airbag mit der Airbagsteuereinrichtung wirkverbunden ist.

13. Behälter (1) nach einem der vorhergehenden Ansprüche, wobei der Behälter Führungseinrichtungen (7) umfasst, wobei die Führungseinrichtungen Bahnen oder Führungsschienen (7) umfassen.

14. Verfahren zum Aufbewahren von Feldfrüchten in einem Behälter (1) nach einem der Ansprüche 1 bis 13, wobei das Verfahren Folgendes umfasst: Positionieren eines Gegenstands im Behälter; Aufblasen eines horizontalen Airbags (10a-10d) im Behälter, wobei sich der horizontale Airbag entlang einer Seitenwand (2) des Behälters (1) erstreckt, wobei der horizontale Airbag (10a-10d) im aufgeblasenen Zustand eine Trennung zwischen dem Gegenstand und der Seitenwand des Behälters definiert; und Aktivieren einer Gasstromerzeugungseinrichtung (9), die an die Decke (4) des Behälters angrenzend angeordnet ist, um einen Gasstrom innerhalb des Behälters zu erzeugen, wobei der Gasstrom durch eine Gasstromerzeugungseinrichtung (9) des Behälters geführt wird, innerhalb des Spalts zu strömen, der zwischen dem horizontalen Airbag (10a-10d) und der Seitenwand des Behälters ausgebildet ist, und wobei das Gas nicht innerhalb des Volumens des mindestens einen Airbags strömt.

15. Verfahren nach Anspruch 14, wobei der Schritt des Positionierens eines Gegenstands innerhalb des Behälters das Transportieren eines Gegenstands entlang einer Führungseinrichtung (7) unter Verwendung eines Roboters (300) umfasst.

## Revendications

1. Récipient (1) de stockage de produits agricoles (60), le récipient (1) comprenant : un plancher (3), un plafond (4), et au moins une paroi latérale (2) s'étendant entre le plancher et le plafond du récipient et définissant une limite du récipient ; au moins un moyen d'accès (5) par lequel un article peut entrer et/ou sortir du récipient (1) ; un moyen de génération d'écoulement gazeux (9) situé adjacent au plafond (4) du récipient ; un moyen de guidage d'écoulement gazeux (11) ; et au moins un coussin gonflable (10a-10d) destiné à venir en contact avec un article à l'intérieur du récipient (1) pour définir une séparation entre l'article et l'au moins une paroi latérale du récipient, l'au moins un coussin gonflable (10a-10d) comprenant au moins un coussin gonflable horizontal s'étendant le long de l'au moins une paroi latérale (2) du récipient (1), un espace étant formé entre l'au moins un coussin gonflable horizontal (10a-10d) et l'au moins une paroi latérale du récipient, le moyen de génération d'écoulement gazeux (9) étant conçu pour générer un écoulement de gaz qui est guidé par le moyen de guidage d'écoulement gazeux (11) pour s'écouler dans l'espace formé entre l'au moins un coussin gonflable horizontal (10a-10d) et l'au moins une paroi latérale du récipient, et l'écoulement de gaz ne s'écoulant pas à l'intérieur du volume de l'au moins un coussin gonflable (10a-10d).

2. Récipient (1) selon la revendication 1, l'au moins un coussin gonflable horizontal (10a-10d) comprenant au moins un coussin gonflable horizontal s'étendant le long d'une partie supérieure de la paroi latérale (2) du récipient (1) et au moins un coussin gonflable horizontal s'étendant le long d'une partie inférieure de la paroi latérale du récipient.

3. Récipient (1) selon la revendication 1 ou 2, le récipient étant une salle de mûrissement destinée au mûrissement de produits agricoles, le récipient comprenant une atmosphère contrôlée (12), l'atmosphère contrôlée comprenant un agent de mûrissement (12a).

4. Récipient (1) selon l'une quelconque des revendications précédentes, le ou chaque coussin gonflable (10a-10d) étant un coussin gonflable autopliant.

5. Récipient (1) selon la revendication 4, le ou chaque coussin gonflable (10a-10d) comprenant un moyen de support interne (20) pouvant être fixé à une surface interne (21) du coussin gonflable.

6. Récipient (1) selon la revendication 5, le ou chaque moyen de support interne (20) étant de forme sensiblement rectangulaire ou trapézoïdale, le ou chaque moyen de support interne comprenant une ligne de pliage (25), le ou chaque moyen de support interne étant renforcé par au moins un élément de renforcement (26a, 26b).

7. Récipient (1) selon l'une quelconque des revendications précédentes, le moyen de génération d'écoulement gazeux (9) permettant de créer un écoulement de gaz au-delà d'articles situés à l'intérieur du récipient.

8. Récipient (1) selon l'une quelconque des revendications précédentes, le récipient comprenant un plénum (95), le ou chaque coussin gonflable, dans son état gonflé, scellant au moins une partie du plénum.

9. Récipient (1) selon l'une quelconque des revendications précédentes, le ou chaque coussin gonflable, dans son état gonflé, étant conçu pour exclure l'écoulement de gaz d'un volume à l'intérieur du récipient.

10. Récipient (1) selon l'une quelconque des revendications précédentes, le récipient comprenant au moins un moyen de support (40, 50) pour supporter et positionner le ou les coussins gonflables.

11. Récipient (1) selon l'une quelconque des revendications précédentes, le récipient comprenant au moins un coussin gonflable (10e) qui s'étend le long d'un développement vertical.

12. Récipient (1) selon l'une quelconque des revendications précédentes, comprenant un moyen de commande de coussin gonflable (93), le ou chaque coussin gonflable étant relié de manière opérationnelle au moyen de commande de coussin gonflable.

13. Récipient (1) selon l'une quelconque des revendications précédentes, le récipient comprenant un moyen de guidage (7), le moyen de guidage comprenant des pistes ou des rails de guidage (7).

14. Procédé pour stocker un article de produits agricoles dans un récipient (1) selon l'une quelconque des revendications 1 à 13, le procédé comprenant les étapes consistant à : placer un article dans le récipient ; gonfler un coussin gonflable horizontal (10a-10d) dans le récipient, le coussin gonflable horizontal s'étendant le long d'une paroi latérale (2) du récipient (1), dans son état gonflé, le coussin gonflable horizontal (10a-10d) définissant une séparation entre l'article et la paroi latérale du récipient ; et activer un moyen de génération d'écoulement gazeux (9) situé à proximité du plafond (4) du récipient pour créer un écoulement de gaz à l'intérieur du récipient, l'écoulement de gaz étant guidé par un moyen de génération d'écoulement gazeux (9) du récipient pour s'écouler dans un espace formé entre le coussin gonflable horizontal (10a-10d) et la paroi latérale du récipient, et le gaz ne s'écoulant pas dans le volume de l'au moins un coussin gonflable.

15. Procédé selon la revendication 14, l'étape de placement d'un article à l'intérieur du récipient comprenant l'étape consistant à transporter un article le long d'un moyen de guidage (7) à l'aide d'un robot (300).
